# EUROPEAN PATENT APPLICATION

(11) **EP 4 325 451 A1**
(43) Date of publication of application: **21.02.2024**
(21) Application number: 22190469.1
(22) Date of filing: 16.08.2022
(51) Int. Cl.: G06V 40/40, G06V 40/16

(54) **METHOD FOR DETECTING SPOOF IN FACIAL RECOGNITION AND COMPUTER READABLE MEDIUM AND VEHICLE FOR PERFORMING SUCH METHOD**

(71) Applicant: e.solutions GmbH, 85055 Ingolstadt (DE)
(72) Inventor: KÖHLER, Thomas, 90419 Nürnberg (DE); STOCK, Matthias, 91336 Heroldsbach (DE); DEITSCH, Sergiu, 90491 Nürnberg (DE)
(74) Representative: Schornack, Oliver

(57) **Abstract**

A method for detecting spoof in facial recognition is disclosed that comprises receiving (310) a first image of a face, determining (320) a two-dimensional facial landmark in the first image of the face, determining (330) a three-dimensional landmark in the image of the face using a face shape model, receiving (340) a second image of the face, generating (350) a tuple of corresponding two-dimensional points from the first image and the second image, calculating (360) a three-dimensional facial landmark from the generated tuple, and determining (370) a consistency measure between the three-dimensional landmark based on the face shape model and the three-dimensional facial landmark, wherein the consistency measure indicates a spoof of the face.

## Description

The present invention relates to a method for detecting spoof in facial recognition, a computer readable medium storing instructions to perform the method, and a vehicle including at least a processor configured to perform such method. In particular, the present invention relates to a method for detecting spoof in facial recognition using a model-based reconstruction of 3D landmarks of a face and a geometry-based reconstruction of 3D landmarks of the face, and further relates to a computer readable medium storing instructions to perform the method as well as a vehicle comprising a camera and a processor configured to perform the method.

Facial recognition is a popular tool for authenticating a user or determining the presence of a real person and allowing an authenticated user / a real person activating certain functions or using components, devices etc. The facial recognition is based on the capturing of images or videos using conventional hardware, such as a CCD or CMOS sensor, and the extraction of facial features, such as biometric characteristics of a captured face. If the facial features match stored facial features of a pre-authenticated user, the user is allowed to access the functions, components, devices etc.. On the other hand, some functions may only be activated if a human being is detected in front of the image capturing device (e.g. a camera), to simply verify that a user is present, but without specific user authentication.

Such systems, however, are increasingly subject of spoofing attacks, for example, in that a printed photo or a video played on a display is presented to the image sensor or camera. A printed photo and a video display sometimes allow successful spoofing attacks due to high quality printers and high-resolution displays used for forgery.

Thus, the detection of various attack types, such as attacks using a flat print out or flat display, has been addressed by employing 3D sensors to gain a dense depth map for obtaining spatially distributed point patterns. Such 3D technology, however, is cost intensive and cannot be installed in all devices, such as cars driven by a vast variety of users.

It is an object of the present invention to provide a cost-effective and still efficient method for detecting spoof in facial recognition as well as computer readable instructions and a vehicle performing such method.

This object is solved by a method comprising the features of claim 1, a computer readable medium comprising the features of claim 10, and a vehicle comprising the features of claim 11.

Preferred embodiments are defined by the dependent claims.

According to a first aspect to better understand the present disclosure, a method for detecting spoof in facial recognition comprises receiving a first image of a face, and determining a two-dimensional facial landmark in the image of the face. Such two-dimensional facial landmark can be any anatomical region that is derivable from data representing the first image. Due to the peculiarity of the facial landmark it is identifiable with less processing resources than other regions of the face. An anatomical region can be a nasal tip, eyelid, chin, eyebrow, or other biometric feature of a face.

The method further comprises determining a three-dimensional landmark in the image of the face using a face shape model. The face shape model can be an average face shape model, i.e. a three-dimensional representation of an average human face/head. The three-dimensional landmark can be determined on the basis of the anatomical region(s) already identified in said determining the two-dimensional facial landmark in the image. For instance, the two-dimensional facial landmark can be placed on or overlaid over the three-dimensional average face shape model.

The method further comprises receiving a second image of the face, generating a tuple of corresponding two-dimensional points from the first image and the second image, and calculating a three-dimensional facial landmark from the generated tuple. In other words, a two-dimensional facial landmark in the second image is determined in a manner as in the first image. As an example only, the two-dimensional facial landmark of the first image may be tracked in subsequently captured images, of which one is the second image. A generated tuple shall include respective two-dimensional points from the first and second image representing the same facial landmark, i.e. the same anatomical region. The three-dimensional facial landmark can then be generated based on the two-dimensional points in the tuple.

The method further comprises determining a consistency measure between the three-dimensional landmark based on the face shape model and the three-dimensional facial landmark, wherein the consistency measure indicates a spoof of the face. Specifically, two three-dimensional landmarks are compared with one another, each of which has been derived by a different technique, i.e. a model-based reconstruction and a geometry-based reconstruction, respectively. In case of a real face, a high consistency between both reconstructions is to be expected. In other words, in case of a real face, both reconstructions will lead to a quite similar or the same three-dimensional landmark, while a spoof (e.g. a printout or display device in front of the image capturing device) will most likely lead to different three-dimensional landmarks having a low consistency. Thus, an indicator for a spoof (or spoofing attack) can be found in a low consistency.

The comparison of two three-dimensional landmarks can be implemented in a cost-effective manner as it can be performed by general graphic processing devices/processors, while the method is still effective due to the different ways of generating/determining the three-dimensional landmarks.

While the present disclosure refers to a single two-dimensional landmark and a single three-dimensional (facial) landmark to increase legibility, it is to be understood that the disclosed method can determine a plurality of two-dimensional landmarks and consequently a plurality of three-dimensional (facial) landmarks of the face. For each two-dimensional landmark a tuple is generated representing the same landmark in the first and second image. A plurality of three-dimensional (facial) landmarks in each of the first and second image will increase accuracy of the method with respect to detection of a spoof.

In an implementation variant, the method can further comprise determining a respective head pose corresponding to the face in the first image and the second image. A known head pose can be determined in an easy manner in a face image and can facilitate determination of a three-dimensional facial landmark. Thus, calculating the three-dimensional facial landmark can be based at least partially on the determined head poses, i.e. the head pose in each of the first and second image.

In another implementation variant, calculating the three-dimensional facial landmark can comprise performing a triangulation using the two-dimensional points of the tuple and/or a location of a device capturing the first and second image. In other words, if the location of the capturing device (e.g., a camera or other image sensor) is known, the two-dimensional points of the tuple can be brought into a relation thereto. On the other hand, if the location of the capturing device is not available or shall be ignored, it can be assumed that the head of the user performs a simple movement, such as a rotation and/or a tilt movement, so that the three-dimensional facial landmark can also be calculated solely on the two-dimensional points of the tuple. Thus, a cost-effective image processing can be implemented to conduct the method.

In yet another implementation variant, said receiving the second image can comprise selecting from a video an image frame that has been captured later than the first image. It is further possible that the first and second image are respective image frames from the video captured subsequently to one another.

In order to derive three-dimensional facial landmarks representing sufficient motion of the face, a time period between the capturing of the first image and the second image should be sufficiently large, e.g., should be greater than half a second, one second, two seconds or even five seconds.

Optionally, said selecting of the image frame for the second image can comprise selecting an image frame including motion relative to the first image. Such motion of a captured object, such as the face, between the first image and the second image can be easily detected by common motion detection tools. As a mere example, motion of the captured object can be performed by a head tracking process, for example, a process comparing pixel values of the underlying image data. This may involve a comparison of a rotational angle against a threshold. Furthermore, in case of motion captured by the camera, pixel data of the second image is different compared to the pixel data of the first image. The larger the change of pixel data or the data of blocks of pixels, the larger is the motion of the captured object.

In a further implementation variant, the method can further comprise requesting a user associated with the face to perform a certain head movement before receiving the second image. For instance, the user may be asked to turn the head to the left or the right or to nod. Thus, a challenge and response approach can be employed to facilitate detecting a spoof or spoofing attack.

In another implementation variant, said determining the consistency measure can comprise calculating a spatial difference between the three-dimensional landmark based on the face shape model and the three-dimensional facial landmark, and comparing the spatial difference with a threshold value. The spatial difference can simply be calculated by 3D coordinate subtraction or determining a vector from the three-dimensional landmark (3D point) using the face shape model and the three-dimensional facial landmark (3D point; geometry-based reconstruction). The larger a deviation from the threshold value is, the greater is the probability of a spoofing attack.

Furthermore, for a single landmarks as well as a plurality of three-dimensional (facial) landmarks, a cosine similarity over all 3D landmarks (3D points) can be performed, which is then compared with a threshold value. This allows determination of a simple consistency measure range, such as from 0 to 1, wherein 1 denotes a high consistency between both reconstructions.

In yet another implementation variant, the threshold value can be adjusted (learned) by a neural network trained on a training dataset. For instance, the training dataset can comprise a plurality of images of real faces as well as spoofs, so that the neural network can be trained to identify the spoofs and thereby develops the threshold value for the comparison.

Additionally or alternatively, probabilities could be calibrated from the raw consistency measure, which probabilities could then be compared with a threshold. The calibration of the probabilities can be conducted, for example, using Platt scaling.

In a further implementation variant, the method can comprise outputting a signal indicating whether the first and second image include a bonafide image of the face or is a spoof. Such a signal can be output to any system that requires the information whether a real user face is captured or not. Alternatively or additionally, the signal can be used to visually or audibly output information to the user indicating that a spoof has been detected.

According to a second aspect to better understand the present disclosure, a computer-readable medium is configured to store executable instructions that, when executed by a processor, cause the processor to perform the method according to the first aspect or one or more of the associated implementation variants. For example, the computer-readable medium can be a volatile or non-volatile memory, such as a CD, DVD, USB-stick, RAM, ROM memory or the like.

According to a third aspect to better understand the present disclosure, a vehicle comprises a camera, and a processor configured to perform the method according to the first aspect or one or more of the associated implementation variants. The camera is configured to capture and provide the first and second image. Thus, detection of spoof in facial recognition can be employed in the vehicle for any recognition or authentication purpose. The processor may be a dedicated processor or may form part of a vehicle computing system, such as an engine control unit (ECU).

In an implementation variant, the vehicle can further comprise a face tracking system (also referred to as a face tracker) configured to observe a driver of the vehicle. The face tracker is configured to capture and provide the first and second image. Thus, a face tracker already implemented in the vehicle or at least data provided by the face tracker can be further used to detect a spoofing attack.

In another implementation variant, the vehicle can further comprise a security system configured to deactivate a vehicle component, if the processor outputs a signal that a spoof of the face has been detected. The vehicle component can, for example, be the engine control unit, so that the engine may not start when the processor outputs the signal. Thus, a keyless security system for using the car can be implemented. On the other hand, the vehicle component can be an infotainment system, so that for example the infotainment system cannot be activated in case of a spoofing attack.

In an implementation variant the processor is further configured to perform the method each time the vehicle starts a journey.

In another implementation variant, the vehicle can further comprise a driver assistance system including the camera and configured to observe a driver of the vehicle. Some driver assistance systems observe the driver, for example, whether the driver becomes tired or the like. For this reason, a camera is pointed to the driver, which can be used for the anti-spoofing measures of the present disclosure, so that no additional camera is required.

In yet another implementation variant, the vehicle can further comprise a display, wherein the processor is configured to provide guiding information for the user. For example, the processor can be configured to provide information to request the user associated with the face to perform a certain head movement. If the processor detects motion of the users face, the second image can be captured.

According to yet another aspect, an electronic device comprises a processor configured to perform the method according to the first aspect or one or more of the associated implementation variants. Such electronic device can be any handheld device, such as a mobile phone, a tablet computer, a laptop, a PC, etc., or a device mounted into a machine or the like.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

Preferred embodiments of the invention are now explained in greater detail with reference to the enclosed schematic drawings, in which
- Figure 1: schematically illustrates components capable of performing a method for detecting spoof in facial recognition,
- Figure 2: illustrates a schematic diagram of a method for detecting spoof in facial recognition,
- Figure 3: schematically illustrates a vehicle, and
- Figure 4: schematically illustrates an electronic device.

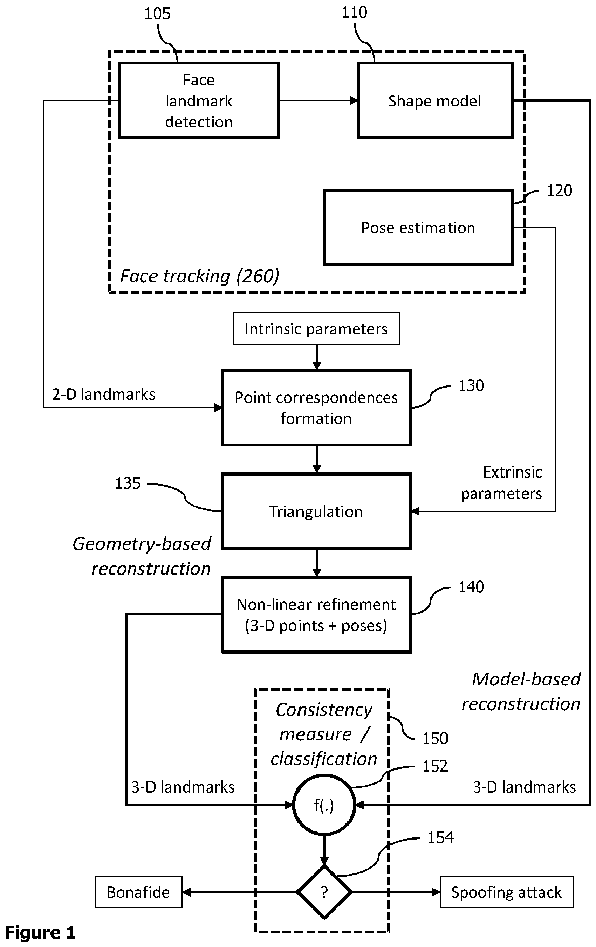

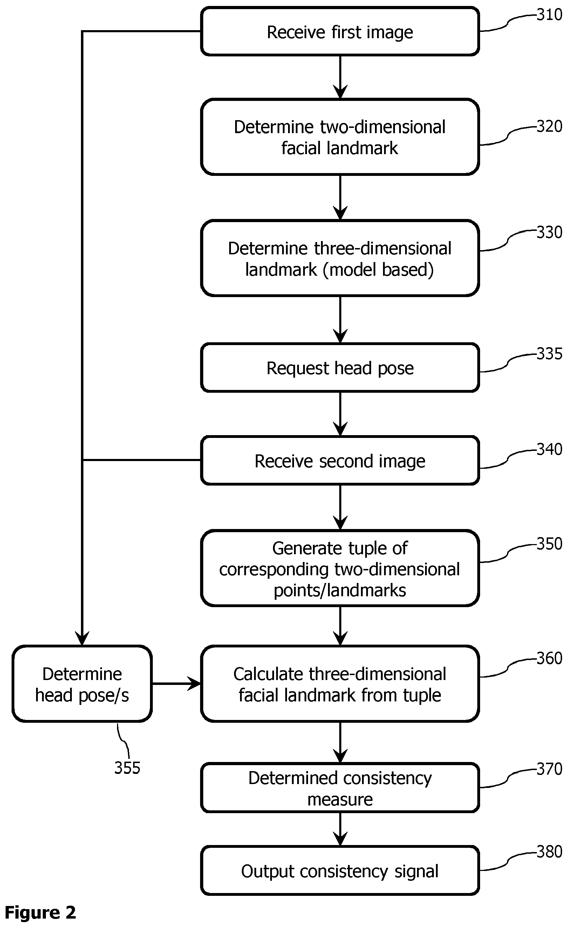

Figure 1 schematically illustrates components capable of performing a method for detecting spoof in facial recognition, and Figure 2 illustrates a schematic diagram of such method.

In order to detect spoof in facial recognition, a first image of a face is received in step 310. For instance, the first image can be captured by a camera or other sensor providing data, such as pixel data, including the face. In the first image a two-dimensional facial landmark is determined in step 320, for example by facial landmark detection component 105. The facial landmark detection 105 (or face landmark detection) can identify an anatomical region, such as a nasal tip, an eyelid, a chin, an eyebrow, etc. of the face. The facial landmark detection 105 can output (pixel) data associated with the two-dimensional facial landmark. The data can be or include coordinates identifying the anatomical region.

Using a face shape model 110 a three-dimensional landmark can be determined in the first image of the face (step 330). Any average face shape model can be used, onto which the first image is overlaid. This allows converting the two-dimensional facial landmark (anatomical region) to a three-dimensional facial landmark. For instance, the face shape model 110 can receive information and/or data of the first image, such as an output of the face landmark detection 105.

The face landmark detection 105 and the face shape model 110 can constitute components of a face tracker 260, a known component capable of identifying a face in an image and following the face in subsequent images, such as in a video.

In the method a second image of the face is received (step 340), for example from the camera and/or the face tracker 260. From the second image a two-dimensional facial landmark is again determined, such as in step 320 with respect to the first image.

These two-dimensional facial landmarks are supplied to a point correspondence formation 130, which identifies whether two of the two-dimensional facial landmarks from different (subsequently captured) images correspond to the same anatomical region, i.e. are associated with the same facial landmark. This information is usually provided by a face tracker 260. Thus, in step 350, a tuple of corresponding two-dimensional points from the first image and the second image is generated. For instance, the two-dimensional facial landmark of the first image can be tracked, for example, via information provided by face tracker 260, and, hence, easily identified in the second image.

The point correspondence formation component 130 may be provided with intrinsic parameters of the system, such as of the camera. This allows easier identification of the facial landmark in each of the images.

Thereafter, a three-dimensional facial landmark is calculated in step 360 from the generated tuple. For example, a triangulation conducted in component 135 can be performed on the basis of the information regarding the two-dimensional facial landmark determined in the first image and the second image.

Optionally, extrinsic parameters may be used to facilitate calculating the three-dimensional facial landmark. Such extrinsic parameters may, for example, be derived from a pose estimation 120. The pose estimation 120 may determine in step 355 a respective head pose corresponding to the face in the first image and the second image. The pose estimation 120 can optionally be part of the face tracker 260, or can be an independent component. Further optionally, the user may be requested in step 335 to perform a certain head movement, i.e. to achieve a requested head pose, before the second image is captured and received.

Additionally or alternatively, component 140 may conduct a non-linear refinement on the three-dimensional facial landmarks (3D points) as well as the head pose from pose estimation 120. Non-linear refinement helps to improve the accuracy of 3D landmarks estimates that are initially obtained by linear methods (e.g., triangulation). Exploiting refined 3D landmarks increases the robustness of subsequent similarity measures and, thus, the reliability of the proposed face anti-spoofing method.

In other words, components 105 to 140 allow a reconstruction of a three-dimensional facial landmark in a geometry-based approach. Component 110 provides a three-dimensional landmark in a model-based reconstruction.

In step 370 a consistency measure between the three-dimensional landmark based on the face shape model and the three-dimensional facial landmark based on the geometry-based approach is determined. For example, a consistency measure and/or classification component 150 can conduct such consistency measure determination. The component 150 can include a comparator 152 calculating a spatial relationship between both landmarks. For example, a spatial difference between the three-dimensional landmark based on the face shape model and the three-dimensional facial landmark derived from the geometry-based approach is calculated. The calculated spatial difference can then be compared with a threshold value in component 154. It is to be understood that components 150 to 154 can be implemented in a single device, such as a single processor or dedicated instructions for a processor to conduct the functions of these components 150 to 154.

Depending on whether the consistency measure is high (i.e., the spatial difference is low) it is determined that the face captured in the first and second image is a real face. On the other hand, if the consistency measure is low (i.e., the spatial difference is high), the captured face may actually be a two-dimensional printout or display device, that has a large spatial difference to the three-dimensional landmark derived via the face shape model. Thus, a spoofing attack can be identified in a cost-effective and easy manner.

In step 380, a corresponding consistency signal may be output, that can be used by another system component to perform a proper reaction. For example, in case of the detection of a spoof, certain system components may be deactivated (or not activated) and/or a user information may be visually and/or audibly output.

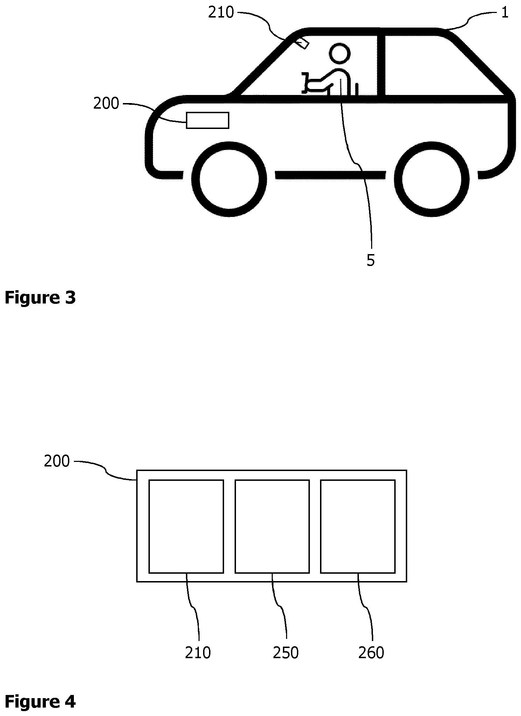

Figures 3 and 4 schematically illustrate a vehicle 1 and an electronic device 200, respectively, wherein the electronic device 200 can form part of the vehicle 1. A driver 5 sits in the vehicle 1, for example, on a driver seat. The vehicle comprises a camera 210 capable of taking an image of at least the face of the driver 5. The image(s) of the face of the driver 5 can be employed in the method of Figure 2.

For example, the camera 210 can be part of a face tracker 260 that is more and more often installed in a vehicle 1 for determination of the state of the driver, for example, whether the driver is watching the traffic ahead of the vehicle 1, is looking into a mirror, or is distracted/tired.

The electronic device 200 of the vehicle 1 can comprise a processor 250. The processor 250 is configured to perform the method illustrated in and explained with respect to Figures 1 and 2. For example, the processor 250 may execute instructions (program code) implementing the components illustrated in Figure 1. Alternatively and/or additionally, at least some of the components 105 to 154 of Figure 1 may be implemented in hardware, while the remaining (or all) of the components are implemented in software executed by the processor 250.

The electronic device 200 can optionally include the camera 210 and/or the face tracker 260.

Thus, the processor 250 can further perform at least some of the method steps illustrated in Figure 2, in order to determine whether the face 10 captured by the camera 210 is a spoof or not (i.e., is a real face).

The vehicle 1 may optionally be equipped with a driver assistance system (not illustrated), which includes the camera 210 and is configured to observe the driver 5 of the vehicle 1. The intended function of such driver assistance system may be to follow the gaze of the driver 5 or estimate tiredness of the driver 5 by processing images captured from the driver 5, particularly the face of the driver 5. The camera 210 of the driver assistance system as well as any information of the head pose output by the driver assistance system can be employed for the disclosed method, so that no redundant devices have to be installed in the vehicle 1.

The above description of the drawings is to be understood as providing only exemplary embodiments of the present invention and shall not limit the invention to these particular embodiments.

## Claims

1. A method for detecting spoof in facial recognition, the method comprising:
receiving (310) a first image of a face;
determining (320) a two-dimensional facial landmark in the first image of the face;
determining (330) a three-dimensional landmark in the image of the face using a face shape model;
receiving (340) a second image of the face;
generating (350) a tuple of corresponding two-dimensional points from the first image and the second image;
calculating (360) a three-dimensional facial landmark from the generated tuple; and
determining (370) a consistency measure between the three-dimensional landmark based on the face shape model and the three-dimensional facial landmark, wherein the consistency measure indicates a spoof of the face.

2. The method according to claim 1, further comprising:
determining (355) a respective head pose corresponding to the face in the first image and the second image,
wherein said calculating (360) the three-dimensional facial landmark is based at least partially on the determined head poses.

3. The method according to claim 1 or 2, wherein said calculating (360) the three-dimensional facial landmark comprises performing a triangulation using the two-dimensional points of the tuple and/or a location of a device capturing the first and second image.

4. The method according to one of claims 1 to 3, wherein said receiving (340) the second image comprises selecting from a video an image frame that has been captured later than the first image.

5. The method according to claim 4, wherein said selecting of the image frame for the second image comprises selecting an image frame including motion relative to the first image.

6. The method according to one of claims 1 to 5, further comprising:
requesting (335) a user associated with the face to perform a certain head movement before receiving (340) the second image.

7. The method according to one of claims 1 to 6, wherein said determining (370) the consistency measure comprises calculating a spatial difference between the three-dimensional landmark based on the face shape model and the three-dimensional facial landmark, and comparing the spatial difference with a threshold value.

8. The method according to claim 7, wherein the threshold value is adjusted by a neural network trained on a training dataset.

9. The method according to one of claims 1 to 8, further comprising:
outputting (380) a signal indicating whether the first and second image include a bonafide image of the face or is a spoof.

10. A computer-readable medium configured to store executable instructions that, when executed by a processor (250), cause the processor (250) to perform the method according to one of claims 1 to 9.

11. A vehicle (1) comprising:
a camera (210); and
a processor (250) configured to perform the method according to one of claims 1 to 9,
wherein the camera (210) is configured to capture and provide the first and second image.

12. The vehicle (1) according to claim 11, further comprising:
a face tracking system (260) configured to observe a driver (5) of the vehicle (1),
wherein the face tracking system (260) is configured to capture and provide the first and second image.
